# EUROPEAN PATENT APPLICATION

(11) **EP 2 533 510 A1**
(43) Date of publication of application: **12.12.2012**
(21) Application number: 11180821.8
(22) Date of filing: 09.09.2011
(51) Int. Cl.: H04M 3/56, H04L 29/06

(54) **Audio conference system**

(30) Priority: 06.06.2011 GB 201109417
(71) Applicant: Trilogy Communications Holdings Limited, Andover Hampshire SP10 5NY (GB)
(72) Inventor: Wren, Mark, Aventura, Florida 33180 (US)
(74) Representative: Want, Clifford James

(57) **Abstract**

Present invention relate to an audio conference system, the system comprising: a plurality of operator interface devices (102,104,106,) each operator interface device being connected to an internet protocol (IP) network (110); and an audio mixing and routing hub (108), the hub (108) being connected to each operator interface device (102,106,108) through a duplex internet protocol audio channel over the IP network. The hub (108) is configured to: receive at least a first primary audio stream from at least one of the operator interface devices; mix the primary audio streams to produce a first mixed audio stream; and transmit the first mixed audio stream to at least one of the operator interface devices.

## Description

### Field of the Invention

This invention relates to an audio conference system.

### Background to the Invention

Presently, telecommunication systems exist to provide one-to-one, one-to-many and many-to-many communications in a form often known as intercom, talkback or conferencing. These systems are generally used when a given operator needs to speak and/or listen to a large number of other operators, typically located not only within a given building but across multiple sites, preferably interconnected by an Internet Protocol network.

Such systems generally use vendor-specific interconnections and dedicated software, and frequently make use of proprietary protocols to transport audio and control messages across an IP network.

Commercially available telephony-based multi-user systems are available providing both one-to-one calls as well as "conferencing" capabilities. The mixing, or conferencing, of the audio is either provided by a central phone switch (for example, a PBX), or to a limited degree at the telephone device itself.

In the case of "IP phones", such as, but not limited to, Session Initiation Protocol, or "SIP" phones, a limited ability to receive multiple IP audio streams is provided. Simple SIP phones often provide "3-way calling" allowing two bi-directional calls to be established and locally mixed as a conference. More advanced phones may offer more channels, dependent on processing power and device cost.

This has the disadvantage that, for every additional participant, there is an additional audio stream, requiring increased processing power at the SIP phone. This has a direct impact on cost and complexity, as well as a proportional increase in IP network bandwidth utilised.

If a central PBX or, in the case of SIP, a SIP-enabled PBX or "SIP server", is used then audio can be mixed centrally and delivered as a single audio stream, addressing the issue of network bandwidth.

In either case, only a single conference per operator is typically supported, and should an operator need to make an audio connection to another conference, or to another operator directly, the initial conference must be terminated or, at the very least, suspended and put "on hold" in order to free up audio channel resources. Such functionality is often dependent on the functionality provided by the SIP server since it is not a native SIP function.

Commercially available intercom systems provide considerably more flexibility in their ability to mix and route audio to intercom users. Indeed, current art typically allows a mix to be generated comprising audio from a// users and for it to be routed to one, many or all users. This is known within the industry as "fully non-blocking" since all operators may speak to all operators simultaneously if so required, without any audio route being blocked through lack of mixing resources.

Control over the audio mix being sent to a given operator, unlike the phone conferencing system described earlier, is advantageously directly under the control of the operator. The operator is provided with a control panel equipped with multiple keys allowing full and individual control over where the operator's audio is to be sent, and to which other operators or conferences the user wishes to listen.

Such systems use a centralised mixing/routing system, with audio and control connections to the system typically made in a "star" arrangement - all devices connect back to the central system. However the vast majority of systems commercially available today do not transport audio and control to the user over an IP network.

Instead, such systems may route audio to the operators using analogue audio connections, such as, but not limited to, a traditional telephone 2-wire line or a balanced-audio"4-wire" circuit, or using a proprietary digital interconnect. Disadvantageously, the operator must be located within a reasonable distance of the central intercom system, and dedicated cabling infrastructure must be provided, in order to provide the flexibility of audio routing and mixing control that is required.

In essence, the operators are tethered to the system by this cabling, and are unable to roam freely - globally -whilst retaining full audio communication flexibility.

In any intercom system that does use standard audio transport protocols, such as, but not exclusively, SIP, the functionality is typically derived from that of IP phone systems, with the same inherent disadvantages as described earlier in relation to IP phones, namely: increasing processing overhead network bandwidth for each additional audio channel established.

Some such systems use proprietary audio transport protocols or compression algorithms which, apart from being vendor-specific, have notable disadvantages: they may be inherently incapable of being transported outside a local area network due to not using Internet Protocol, or they may consume such high bandwidth that a Wide Area Network (WAN) is incapable of reliably delivering audio to remote operators.

A significant advantage of commercially available intercom systems, compared to IP phone systems, is the rich functionality and easy to use user interfaces that are provided. This rich functionality is provided by either a dedicated physical control panel interface, or a proprietary software control panel that must be installed on the operator's workstation.

Although IP phones - whether physical devices, or software phones - can provide rich functionality, this, too, is tied to a specific IP-PBX vendor's application and server system: SIP is a standard developed to initiate an audio "session" and does not provide for system-specific messages that, for example, initiate a conference.

The current art therefore does not allow for a system with the following objectives:
- The ability to send and receive audio using standard protocols and compression algorithms, with no increase in the network bandwidth used, no matter how many audio channels are being received.
- The software used to send and receive audio be non-vendor specific.
- A feature-rich and user-friendly software control panel interface that, however, does not require the installation of vendor-specific software.
- An operator interface that is capable of being deployed on a wide range of commercially available devices including, but not limited to, mobile phones, PC workstations, notebook computers, and tablet devices.
- The processing resources required on these devices must not significantly increase when either additional audio channels are received, or when audio is transmitted to an increasing number of operators.

### Summary of the Invention

In pursuit of this aim, a presently preferred embodiment of the present invention provides an audio conference system, the system comprising: a plurality of operator interface devices, each operator interface device being connected to an internet protocol (IP) network; and an audio mixing and routing hub, the hub being connected to each operator interface device through a duplex internet protocol audio channel over the IP network. In use, the hub is configured to: receive at least a first primary audio stream from at least one of the operator interface devices; mix the primary audio streams to produce a first mixed audio stream; and transmit the first mixed audio stream to at least one of the operator interface devices.

In this way a system according to the invention provides an audio conference facility whereby multiple operators can communicate in multiple different groups, simultaneously if required. The operator interface device may only maintain a single duplex audio channel to the audio mixing and routing hub. If the operator interface device only maintains one duplex audio connection, to the hub, then the bandwidth and processing power required by that operator interface device is low, and remains low no matter how many operator interface devices are connected simultaneously, and regardless of the arrangement of the operator interface devices with respect to audio connections.

An operator interface device may comprise a personal computer such as a laptop, a tablet or a desktop computer. An operator interface device may also comprise a dedicated telecommunications device such as a mobile phone or an IP phone. An operator interface device may comprise any device suitable for establishing a duplex audio connection with the hub.

An audio conference system according to the invention may also support video conferencing using the same architecture, if required.

The hub may connect to at least one operator interface device by means other than an IP network, for example over a dedicated connection, or over a public switched telephone network.

It may be that the connection between the hub and at least one peripheral comprises a voice over internet protocol (VOIP) connection. In some embodiments the connection between the hub and every peripheral comprises a VOIP connection, however in other embodiments only some connections will rely on VOIP.

Typically, the connection between the hub and at least one peripheral is controlled by the session initiation protocol (SIP). In some embodiments the connection between the hub and every peripheral is controlled by SIP, however in other embodiments only some connections will rely on SIP.

It may be that the connection between the hub and at least one peripheral comprises a virtual private network (VPN). The VPN may extend over the internet, or some other unsecured network, as desired.

It may be that the hub will only accept a connection from an operator interface device if the operator interface device is located at an IP address which matches one of a predefined list of IP addresses.

The hub may be further configured to: mix the primary audio streams to produce a second mixed audio stream, the second mixed audio stream being different from the first mixed audio stream; and transmit the second mixed audio stream to at least one of the operator interface devices. The hub may produce as many mixed audio streams as required, and transmit each one to a different operator interface device or group of operator interface devices.

In some embodiments, at least one operator interface device comprises control software which provides control over the contents of at least a first mixed audio stream. In this way an embodiment of the system can provide operators with control over the mixing and routing behaviour of the hub.

It may be that each operator interface device is assigned a security level. The contents of the mixed audio stream sent to an operator interface device may be determined by the security level of that device.

Where control software and security levels as described above are used with an audio conference system according to the invention, it may be that at least one operator interface device is assigned an administrative security level, wherein the control software of an operator interface device with an administrative security level provides control over the contents of at least two mixed audio streams.

The security level of an operator interface device may be determined by the IP address of that device. In some embodiments, the hub is configured to receive a unique operator identifier from at least one operator interface device, and assign at least one operator interface device a security level according to the predefined security level of the associated unique operator identifier.

The control software may comprise an internet browser. There may also be a dedicated hardware interface for controlling the contents of at least a first mixed audio stream.

The invention further extends to an audio mixing and routing hub suitable for use in the system as described above.

This invention relates to a system and method of providing flexible multi-channel audio communications over IP networks using non-proprietary, industry standard protocols and technology.

There is a requirement to provide audio communications for, but not exclusively for, intercom and conferencing, that provides the ability to transmit and receive audio to meet the above objectives.

According to an aspect of the invention, there is provided an audio mixing and routing system supporting at least one duplex Internet Protocol audio channel over a network.

Advantageously, the audio mixing and routing system is equipped with an IP interface.

Conveniently, the system supports audio transmission using one of RFC3550 Real Time Protocol (RTP) or RFC3711 Secure RTP.

Advantageously, the audio mixing and routing system supports RFC3261 Session Initial Protocol (SIP) as the means for establishing audio sessions.

Conveniently, the audio mixing and routing system supports standard audio compression algorithms as defined by the International Telecommunications Union (ITU), such as, but not limited to, G.711.

Advantageously, the audio mixing and routing system uses one of RFC2616 Hypertext Transport Protocol (HTTP) or Hypertext Transfer Protocol Secure (HTTPS) - a combination of HTTP and RFC 5246 Transport Layer Security (TLS) and Secure Sockets Layer (SSL) - for establishing control connections with a user interface and for the transmission and receiving of control messages.

According to a further aspect of the invention there is provided an operator interface device which is a commercially available computing device which may be, but is not exclusively, one of a mobile telephone device, notebook computer, computer tablet or computer workstation.

Advantageously, the operator interface device is equipped with an IP interface. Conveniently, the operator interface device is provided with any available IP phone software that conforms to RFC3261 Session Initial Protocol (SIP) as its means of establishing audio sessions.

Conveniently, the operator interface device is provided with any Internet Browser application that conforms to one of RFC2616 Hypertext Transport Protocol (HTTP) or Hypertext Transfer Protocol Secure (HTTPS) - a combination of HTTP and RFC 5246 Transport Layer Security (TLS) and Secure Sockets Layer (SSL).

Other aspects of the present invention will become apparent to those skilled in the art on review of the following description of the preferred embodiment. Advantages of these embodiments are set out hereafter, and further details and features of each of these embodiments are defined in the accompanying dependent claims and elsewhere in the following detailed description.

### Brief Description of the Drawings

Various aspects of the teachings of the present invention, and arrangements embodying those teachings, will hereafter be described by way of illustrative example with reference to the accompanying drawings, in which:
Fig. 1 is a diagram of an audio conference system according to the invention; and
Fig. 2, 3 and 4 are illustrations of possible audio connections in a system according to the invention.

### Detailed Description of Preferred Embodiments

Preferred embodiments of the present invention will now be described with particular reference to an audio conference system.

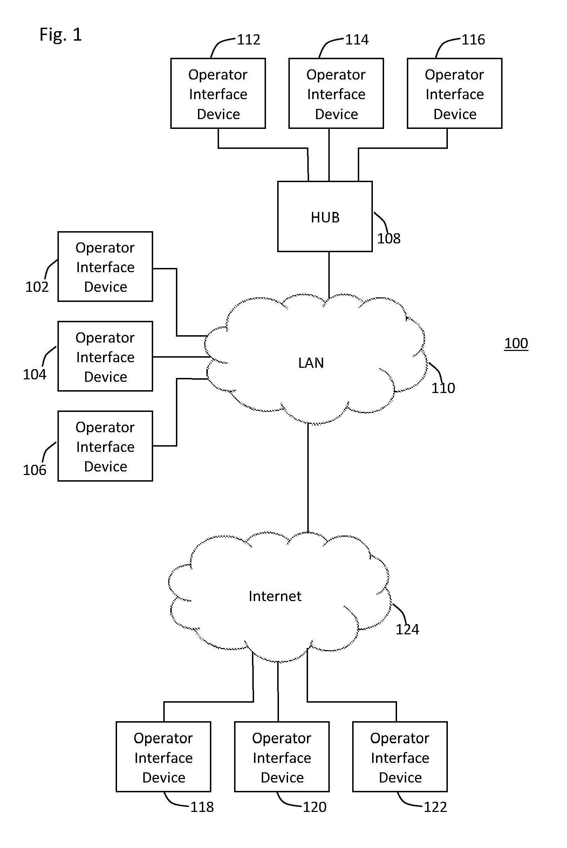

Figure 1 is a diagram of an audio conference system 100 according to the invention. The system comprises a first operator interface device 102, a second operator interface device 104 and a third operator interface device 106 and an audio mixing and routing hub 108, each of which is connected to a local area network (LAN) 110.

Any of the first three operator interface devices 101, 102, 103 can communicate with the audio mixing and routing hub 108 using internet protocol (IP) network techniques.

The operator interface devices 102, 104, 106 and the audio mixing and routing hub 108 support audio transmission using the RFC3550 real time transport protocol (RTP) and the RFC3711 Secure RTP. In some embodiments, only one of these protocols is supported. The operator interface devices 102, 104, 106 and the audio mixing and routing hub 108 also support the RFC3261 session initial protocol (SIP) as a means for establishing an audio sessions.

When an operator wishes to connect the first operator interface device 102 to the audio mixing and routing system 108, the operator uses an internet browser running on the first operator interface device 102 to establish a network connection with the audio mixing and routing hub over the LAN 110. This network connection can be established using the RFC2616 hypertext transfer protocol (HTTP) or the hypertext transfer protocol secure (HTTPS), a combination of HTTP and RFC 5246 transport layer security (TLS) and secure sockets layer (SSL), as preferred.

The audio mixing and routing system presents the operator with a first level of security by sending, using HTTP or HTTPS, user security dialogues that are displayed in the Internet Browser. The user security dialogues are used to ensure that the operator is authorised to connect to the system. The operator enters a unique operator identifier, such as a username and password, and the hub compares the unique operator identifier to a pre-approved list. If the unique operator identifier matches an entry on the pre-approved list, then the hub allows the connection procedure to proceed.

In some embodiments of the invention, a second level of security may be provided by the administrator of the audio mixing and routing hub being able to specifically determine the ranges of IP addresses from which operator interface devices 102, 104, 106 are authorised to connect.

If the levels of security are successfully complied with, the audio mixing and routing system will cause to be displayed within the Internet Browser window of the first operator interface device 102 such control buttons and labels as have been pre-determined, or allowed, by the System Administrator.

The operator may now use an SIP IP phone application that has been installed on the operator device to initiate an audio session with the audio mixing and routing hub. This session will only be acknowledged and accepted by the audio mixing and routing hub 108 if the session request originates from the same IP address as the Internet Browser session. In some embodiments of the invention, a session request will be accepted if the IP address is within a pre-approved range determined by the system administrator, even if it is not the same IP address as the initial browser connection.

The buttons displayed on the first operator interface device's internet browser will typically be used to request that the audio mixing and routing hub 108 provide at least one audio route to or from another operator interface device. These requests are submitted using HTTP or HTTPS in the manner usual for pages displayed on Internet Browsers, and are received by the audio mixing and routing hub 108. If both the first and second operator interface devices 102, 104 are connected, and the operator of the first operator interface device 102 requests that the audio mixing and routing hub 108 route audio from the second operator interface device 104, then the audio mixing and routing hub 108 will do so, routing the audio from the second operator interface device 104 via the audio stream sessions established to the SIP IP Phone applications on each operator interface device 102, 104.

Subsequent requests for audio routes to or from the operator panel will cause the audio mixing and routing hub 108 to mix the additional required audio source to the same single stream being transmitted to the operator device. So if the first operator interface device 102 subsequently requests an audio connection with the third operator interface device 106 then the audio mixing and routing hub 108 provides such a connection by mixing the audio it receives from the second and third operator interface devices 104, 106 and providing the resulting single audio stream to the first operator interface device 102.

When the first operator interface device 102 requests an audio connection, and the audio routing and mixing hub 108 establishes such a connection, the audio routing and mixing hub 108 subsequently sends suitable messages to the internet browser, using the methods usual to web pages, to cause indicators and/or text to be displayed to confirm that requested audio routes have been successfully made.

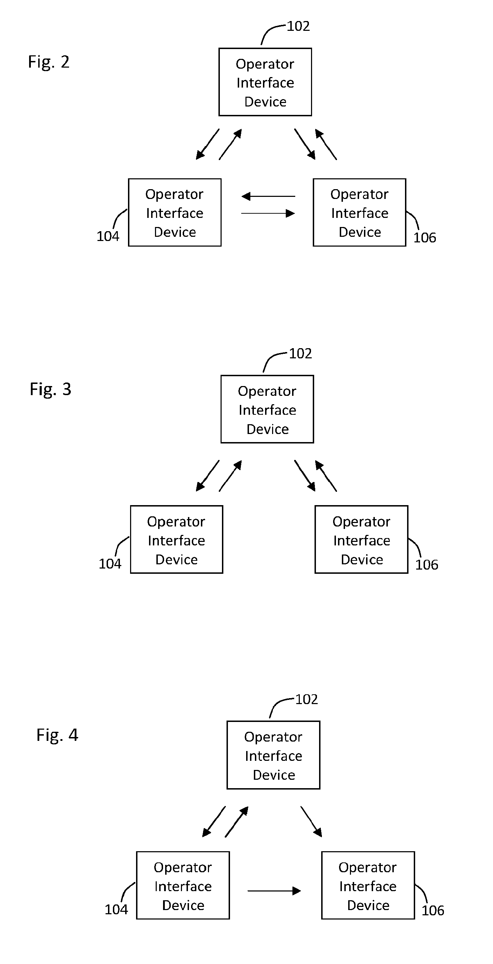

Any combination of operators can be supported by the audio routing and mixing hub 108. Figures 2, 3 and 4 are illustrations of possible audio connections in a system according to the invention, with arrows indicating the transmission of audio. Although it is not illustrated in Figures 2, 3 and 4, all the audio streams are routed through an audio routing and mixing hub 108.

In the arrangement illustrated in Figure 2, the operators of the first, second and third operator interface devices 102, 104, 106 can each talk to and hear both of the other operators. To achieve this, the audio routing and mixing hub 108 receives an audio stream from each of the operator interface devices 102, 104, 106 and produces three mixes, each of which is sent to a different operator interface device 102, 104, 106. So, for example, the audio routing and mixing hub 108 mixes the audio streams from the first and second operator interface devices 102, 104 and streams the resulting mix to the third operator interface device 106.

In the arrangement illustrated in Figure 3, the operator of the first operator interface device 102 can talk to and hear the operators of the second and third operator interface devices 104, 106, but the operators of the second and third operator interface devices cannot communicate. Such an arrangement may be useful in situations where the operator of the second operator interface device wishes to say things which they do not wish the operator of the third operator interface device 104 to hear, for example because of security concerns, while still allowing the operator of the first operator interface device 102 to converse freely with both of the other parties.

In the arrangement illustrated in Figure 4, the operators of the first and second operator interface devices 102, 104 can converse. However, while the operator of the third operator interface device 106 can hear the operators of the first and second operator interface devices 102, 104, the operator of the third operator interface device cannot talk. Such an arrangement may be useful where the operator of the third operator interface device wishes to hear the conversation but not contribute, or if the operator of the third interface device is in a noisy environment and elects to mute their connection in order to prevent the noise making communication difficult for the operators of the first and second operator interface devices 102, 104.

For all three of these arrangements, the required bandwidth and processing resources at the first and second operator interface devices 102, 104 are the same, as in each case both of these devices send a single audio stream and receive a single audio stream. The required bandwidth and processing resources at the third operator interface device 106 may be lower for the arrangement illustrated in Figure 4, because in this arrangement it is not necessary for the third operator interface device 106 to maintain a duplex audio connection with the audio routing and mixing hub 108.

Returning to Figure 1, the audio conference system 100 further comprises a fourth operator interface device 112, a fifth operator interface device 114 and a sixth operator interface device 116. The fourth, fifth and sixth operator interface devices 112, 114, 116 are connected directly to the audio routing and mixing hub 108 and so do not need to connect to the LAN 110 to transmit and receive audio from each other and from the first second and third operator interface devices 102, 104, 106. However they may also be provided with LAN connections if desired.

When an operator wishes to connect the fourth operator interface device 112 to the audio mixing and routing system 108, they follow a procedure similar to the procedure followed by an operator of the first operator interface device 102 described above. The operator uses software running on the fourth operator interface device 112 to establish a connection with the audio mixing and routing hub 108 and provides a unique operator identifier, and then uses SIP IP software to initiate an audio session with the audio mixing and routing hub 108.

The audio conference system 100 further comprises a seventh operator interface device 118, an eighth operator interface device 120 and a ninth operator interface device 122. The seventh, eighth and ninth operator interface devices are not connected to the LAN 110 directly, but are connected to the internet 124, which is in turn connected to the LAN 110. When an operator wishes to connect the seventh operator interface device 118 to the audio mixing and routing system 108, they first establish a virtual private network (VPN) between the seventh operator interface device 118 and the audio mixing and routing system 108. After that the procedure is the same as for the operator of the first operator interface device 102 described above.

## Claims

1. An audio conference system, the system comprising:
a plurality of operator interface devices, each operator interface device being connected to an internet protocol (IP) network; and
an audio mixing and routing hub, the hub being connected to each operator interface device through a duplex internet protocol audio channel over the IP network,
wherein, in use, the hub is configured to:
receive at least a first primary audio stream from at least one of the operator interface devices;
mix the primary audio streams to produce a first mixed audio stream; and
transmit the first mixed audio stream to at least one of the operator interface devices.

2. An audio conference system according to claim 1, wherein the connection between the hub and at least one peripheral comprises a voice over internet protocol (VOIP) connection.

3. An audio conference system according to claim 1 or claim 2, wherein the connection between the hub and at least one peripheral is controlled by the session initiation protocol (SIP).

4. An audio conference system according to any preceding claim, wherein the connection between the hub and at least one peripheral comprises a virtual private network (VPN).

5. An audio conference system according to any preceding claim, wherein the hub will only accept a connection from an operator interface device if the operator interface device is located at an IP address which matches one of a predefined list of IP addresses.

6. An audio conference system according to any preceding claim, wherein the hub is further configured to:
mix the primary audio streams to produce a second mixed audio stream, the second mixed audio stream being different from the first mixed audio stream; and
transmit the second mixed audio stream to at least one of the operator interface devices.

7. An audio conference system according to any preceding claim, wherein at least one operator interface device comprises control software which provides control over the contents of at least a first mixed audio stream.

8. An audio conference system according to any preceding claim, wherein each operator interface device is assigned a security level.

9. An audio conference system according to claim 8, wherein the contents of the mixed audio stream sent to an operator interface device is determined by the security level of that device.

10. An audio conference system according to claims 8 as it depends upon claims 6 and 7, wherein at least one operator interface device is assigned an administrative security level, wherein the control software of an operator interface device with an administrative security level provides control over the contents of at least two mixed audio streams.

11. An audio conference system according to any of claims 8 to 10, wherein the hub is configured to receive a unique operator identifier from at least one operator interface device, and assign at least one operator interface device a security level according to the predefined security level of the associated unique operator identifier.

12. An audio conference system according to claims 7, 10 or 11, wherein the control software comprises an internet browser.

13. An audio mixing and routing hub suitable for use in any preceding claim.
